# EUROPÄISCHE PATENTSCHRIFT

(11) **EP 2 987 615 B1**
(45) Veröffentlichungstag und Bekanntmachung des Hinweises auf die Patenterteilung: **13.06.2018**
(21) Anmeldenummer: 14181503.5
(22) Anmeldetag: 20.08.2014
(51) Int. Cl.: B29C 49/48, B29C 49/04

(54) **Vorrichtung und Verfahren zum Blasformen eines Blasschlauchs**
Device and method for blow moulding a blow hose
Dispositif et procédé de moulage par soufflage d'un flexible soufflé

(43) Veröffentlichungstag der Anmeldung: 24.02.2016
(73) Patentinhaber: Etimex Technical Components GmbH, 89616 Rottenacker (DE)
(72) Erfinder: Werner, Herbert, 89610 Oberdischingen (DE)
(74) Vertreter: Rothkopf, Ferdinand

(56) Entgegenhaltungen:
- EP-A1- 0 796 715
- EP-A1- 1 097 793
- EP-A2- 1 129 839
- DE-A1-102006 037 556
- JP-A- S 644 318

## Beschreibung

### Hintergrund der Erfindung

Die Erfindung betrifft eine Vorrichtung zum Blasformen eines Blasschlauchs bzw. eines Blasformteils, mit einer Blasform, in deren Formhohlraum der Blasschlauch zumindest teilweise aufzunehmen ist, und mit einem in den Formhohlraum einfahrbaren Formschieber. Ferner betrifft die Erfindung ein Verfahren zum Blasformen eines Blasschlauchs mit den Schritten: Einführen bzw. Einbringen eines Blasschlauchs in einen Formhohlraum einer Blasform und Einfahren mindestens eines Formschiebers in den Formhohlraum.

Beim Blasformen, das auch als Extrusionsblasformverfahren bezeichnet wird, wird ein Vorformling in Gestalt eines erwärmten, flexiblen Blasschlauchs aus thermoplastischem Kunststoff mittels einer Extrusionseinrichtung in einen Formhohlraum einer Blasform eingeführt. Dabei kann der Blasschlauch vollständig in den Formhohlraum eingelegt sein oder der Blasschlauch ist größer als der Formhohlraum, wodurch der Blasschlauch über den Formhohlraum hinausgeht. In der Blasform wird der Vorformling dann durch Schließelemente vorne und hinten bzw. oben und unten abgequetscht. Dann schließt sich ein Aufblasen des Vorformlings zu einem Fertigformling und nachfolgend ein Kühlen des Fertigformlings an. Der Blasschlauch wird also mittels einer Blaseinrichtung aufgeblasen, wodurch sich der Blasschlauch mit seinen Wandbereichen an die Innenseiten der Blasform anlegt, das Kunststoffmaterial des Blasschlauchs abkühlt und auf diese Weise ein Kunststoffhohlkörper mit einer hohlförmigen Endgestalt entsteht. Als Blasformverfahren ist ferner ein Saugblasen bekannt, bei dem ein Blasschlauch als Vorformling aus einer Düse einer Extrusionseinrichtung in eine geschlossene Werkzeugform bzw. Blasform befördert und über einen Luftstrom durch die Blasform hindurch "gesaugt" wird. Der Luftstrom transportiert also den Vorformling und verhindert dabei einen vorzeitigen Kontakt des Vorformlings mit der Werkzeugform.

Derartige Blasverfahren erlauben relativ einfache und preiswerte Blasformwerkzeuge. Mit Blasverfahren können also insbesondere Hohlkörper in Großserienfertigung preiswert hergestellt werden.

Ferner werden solche Blasverfahren auch verwendet, um innere Stützstrukturen für faserverstärkte Formteile, auszubilden. Diese Stützstrukturen werden während der Herstellung und Aushärtung der faserverstärkten Formteile als nicht wiederverwendbare Einmalform benötigt. Die Stützstrukturen werden mit Fasern umwickelt und mit Harz unter Druck imprägniert. Hierzu müssen die Blasformteile eine hohe Steifigkeit aufweisen und dennoch möglichst preiswert sein. Ferner sollten sie eine geschlossene Oberfläche aufweisen und stofflich wieder verwertbar sein.

Aus EP 1 129 839 A2 sind eine Vorrichtung und ein Verfahren zum Blasformen eines Blasschlauchs bekannt, mit denen eine aufprallabsorbierende Rippe im Inneren des geformten Blasschlauchs zu schaffen ist beziehungsweise geschaffen wird. Dabei wird ein Vorformling in geöffnete Teilformen gegeben, die dann zu einem Formhohlraum geschlossen werden. Als nächstes wird eine rippenformende Platte gegen eine Teilform gedrängt. Dabei drückt eine Teilwand des Vorformlings gegen dessen gegenüberliegende Teilwand, wobei die beiden Teilwände miteinander verschmelzen.

Aus JP S64 4318 A sind eine Vorrichtung und ein Verfahren zum Blasformen eines Schalldämpfers bekannt, bei denen simultan mit dem Schließen des Formhohlraums um einen Blasschlauch ein Formschieber in den Formhohlraum hineinzufahren ist beziehungsweise hineingefahren wird. Dabei bewegt der Formschieber einen Wandbereich des Blasschlauchs bis zu einem gegenüberliegenden Wandbereich des Blasschlauchs.

Aus EP 1 097 793 A1 sind eine Vorrichtung und ein Verfahren für hohle, blasgeformte Erzeugnisse mit Innenwänden bekannt. Dabei wird ein Vorformling zwischen zwei voneinander getrennten Formteilen positioniert und voll aufgeblasen. Danach werden die Formteile geschlossen. Während des Schließens werden zwei zwischen den Formteilen vorab teilweise eingefahrene Formkerne vollständig eingefahren. Sie bewegen dabei eine Teilwand des Vorformlings an seine gegenüberliegende Teilwand. Die Teilwände verkleben miteinander.

Aus DE 10 2006 037556 A1 und EP 0 796 715 A1 sind Vorrichtungen und Verfahren zum Herstellen von miteinander verbundenen Kunststoffrohren bekannt, mit denen jeweils ein Steg zwischen zwei Rohren zu bilden ist.

### Zugrundeliegende Aufgabe

Der Erfindung liegt die Aufgabe zugrunde, eine Vorrichtung und ein Verfahren zum Blasformen zu schaffen, mittels denen auf kostengünstige Weise steife Hohlkörperstrukturen geschaffen werden können.

### Erfindungsgemäße Lösung

Diese Aufgabe ist erfindungsgemäß mit einer Vorrichtung zum Blasformen eines Blasschlauchs geschaffen, mit einer Blasform, in deren Formhohlraum der Blasschlauch zumindest teilweise aufzunehmen ist, und mit einem in den Formhohlraum einfahrbaren Formschieber, bei der mit dem Formschieber ein Wandbereich des Blasschlauchs derart in den Formhohlraum hinein bis zu einem gegenüberliegenden Wandbereich des Blasschlauchs zu bewegen ist, dass es zu einer Verklebung der beiden Wandbereiche kommt. Das Verkleben kann auch als Verschweißen bezeichnet werden.

Mit der erfindungsgemäßen Vorrichtung und insbesondere mittels deren speziell einfahrbaren Schiebers ist es möglich einen Wandbereich in den Formhohlraum hineinzubewegen und diesen Wandbereich darüber hinaus mit einem gegenüberliegenden Wandbereich zu verkleben. Mit der Verklebung der beiden Wandbereiche werden diese stofflich bzw. stoffschlüssig miteinander verbunden, so dass ein, auch Kräfte übertragender, Kontaktbereich entsteht. Es ergibt sich auf kostengünstige Weise eine Versteifung innerhalb des damit ausgebildeten Hohlkörpers, der insbesondere für die Funktion als Einmalform bei der Herstellung von faserverstärkten Formteilen von Vorteil ist.

Bisher waren bei größeren faserverstärkten Formteilen dünne, blasgeformte bzw. blastechnisch hergestellte Stützstrukturen zu labil. Durch die erfindungsgemäß herstellbaren Verrippungen kann die Steifigkeit des Fertigformlings hingegen derart erhöht werden, dass sich neue Anwendungsbereiche ergeben. Trotz niedriger Wanddicken, besteht eine hohe Formstabilität, und dies bei zumindest einseitig geschlossener Oberfläche am gegenüberliegenden Wandbereich.

Ferner kann mit der erfindungsgemäßen Vorgehensweise auf herkömmliche Verrippungen, die in Gestalt von Oberflächenwellen ausgebildet waren, verzichtet werden. Auch kann auf ansonsten notwendige Einlegeteile in die Hohlform verzichtet werden, die als separates Bauteil herzustellen wären. Mit der erfindungsgemäßen Lösung treten auch weniger geometrische Begrenzungen auf und die gesamte Stützstruktur kann für das zugehörige faserverstärkte Formteil in nur einem Arbeitsgang gefertigt werden.

Der Formschieber ist vorzugsweise nach der Verklebung der beiden Wandbereiche wieder aus dem Formhohlraum vollständig herauszubewegen. Mit dem Herausfahren wird der erfindungsgemäße Formschieber aus dem Formhohlraum wieder entfernt und es entsteht so an der Wand des Formhohlraums wieder eine geschlossene Oberfläche. Zugleich verbleibt aufgrund der erfindungsgemäß hergestellten Verklebung der mit dem Formschieber in den Formhohlraum eingefahrene Wandbereich als Rippe bzw. Quersteg im Inneren des Formhohlraums. Es ergibt sich mit dieser Vorgehensweise also ein Hohlbauteil mit außenseitig geschlossener Oberfläche und innenseitiger Rippe. Vorzugsweise werden also der oder die Formschieber wieder aus dem Formhohlraum bzw. dem Bauteilbereich der Form herausgefahren, wodurch die nach innen bewegten Wandbereiche des Blasformteils aufgrund des innen wirkenden Überdrucks gegeneinander gepresst werden und dabei verkleben. Dadurch wird der, durch die Formschieber gebildete Spalt verschlossen und außen eine glatte, geschlossene Oberfläche für das Blasformteil gebildet.

Bei der erfindungsgemäßen Vorrichtung ist ferner vorteilhaft ein zweiter Formschieber vorgesehen, mit dem der gegenüberliegende Wandbereich des Blasschlauchs in den Formhohlraum hinein zu bewegen ist. Mit dem zweiten Formschieber wird also eine zweite Rippe ausgebildet, die vorteilhaft der ersten gegenüberliegend angeordnet ist. Aufgrund der zweiten Rippe muss sowohl der Formschieber der ersten Rippe als auch der zweiten Rippe vergleichsweise wenig weit bzw. tief in den Formhohlraum hineinbewegt werden. Damit ergeben sich gleichmäßigere und dickere Wandstärken an den hergestellten Rippen.

Ferner ist bei der Vorrichtung gemäß der Erfindung eine Blaseinrichtung vorgesehen, mittels der der Blasschlauch vor der Verklebung der beiden Wandbereiche teilweise aufblasbar ist. Das teilweise Aufblasen geschieht also vorteilhaft vor oder während dem Einfahren des ersten bzw. zweiten Formschiebers. Mit dem teilweisen Aufblasen kann der Vorformling in der Blasform vorausgerichtet und vorpositioniert werden.

Erfindungsgemäß ist eine Blaseinrichtung vorgesehen, mittels der der Blasschlauch nach der Verklebung der beiden Wandbereiche vollständig aufblasbar ist. Das vollständige Aufblasen geschieht also während oder nach dem Ausfahren des ersten bzw. zweiten Formschiebers. Besonders bevorzugt erfolgt das vollständige Aufblasen erst, wenn sowohl der erste als auch der zweite Formschieber vollständig aus dem Formhohlraum wieder herausgefahren sind.

Die Erfindung sieht entsprechend auch ein Verfahren zum Blasformen eines Blasschlauchs mit folgenden Schritten vor: Einführen eines Blasschlauchs in den Bereich des Formhohlraums einer Blasform sowie Einfahren eines Formschiebers in den Formhohlraum und damit Hineinbewegen eines Wandbereichs des Blasschlauchs in den Formhohlraum bis zu einer Verklebung des Wandbereichs mit einem gegenüberliegenden Wandbereich des Blasschlauchs.

Der Formschieber wird vorzugsweise nach der Verklebung der beiden Wandbereiche wieder aus dem Formhohlraum vollständig herausgefahren.

Vorteilhaft wird ferner ein zweiter Formschieber in den Formhohlraum eingefahren und damit der gegenüberliegende Wandbereich des Blasschlauchs in den Formhohlraum bis zu der Verklebung der beiden Wandbereiche hineinbewegt.

Vor der Verklebung der beiden Wandbereiche wird erfindungsgemäß der Blasschlauch teilweise aufgeblasen. Das Vorblasen geschieht wie oben erläutert bevorzugt vor oder während dem Einfahren des ersten bzw. zweiten Formschiebers. Erfindungsgemäß wird nach der Verklebung der beiden Wandbereiche der Blasschlauch vollständig aufgeblasen. Das vollständige Aufblasen erfolgt erfindungsgemäß also während oder nach dem Ausfahren des ersten bzw. zweiten Formschiebers.

Mit dem erfindungsgemäßen Verfahren und dessen vorteilhaften Weiterbildungen wird beim Einformen des Vorformlings in die Blasform eine Verschweißung von Wandbereichen des Blasschlauches im Inneren des zugehörigen Formhohlraums und damit im Inneren bzw. Zwischenbereich des hergestellten Hohlkörpers hergestellt. Die erfindungsgemäßen Formschieber können sowohl von einer als auch von zwei Seiten der zugehörigen Blasform bzw. des zugehörigen Blasschlauchs eingebaut sein. Es lassen sich erfindungsgemäß innen liegende Rippen bzw. Versteifungen bei zugleich geschlossener, äußerer Oberfläche herstellen. Es ist dazu keine besondere maßliche Abstimmung des hergestellten Bauteils erforderlich. Ferner ist die Versteifung mit dem gleichen Material hergestellt, wie die Oberfläche des Bauteils, so dass eine stoffliche Wiederverwertung besonders einfach möglich ist.

### Kurzbeschreibung der Zeichnungen

Nachfolgend wird ein Ausführungsbeispiel der erfindungsgemäßen Lösung anhand der beigefügten schematischen Zeichnungen näher erläutert. Es zeigt:
- Fig. 1: einen Schnitt einer erfindungsgemäßen Vorrichtung bei einem ersten Schritt eines erfindungsgemäßen Verfahrens,
- Fig. 2: den Schnitt gemäß Fig. 1 bei einem zweiten Schritt des erfindungsgemäßen Verfahrens,
- Fig. 3: den Schnitt gemäß Fig. 1 bei einem dritten Schritt des erfindungsgemäßen Verfahrens und
- Fig. 4: den Schnitt gemäß Fig. 1 bei einem vierten Schritt des erfindungsgemäßen Verfahrens.

### Detaillierte Beschreibung des Ausführungsbeispiels

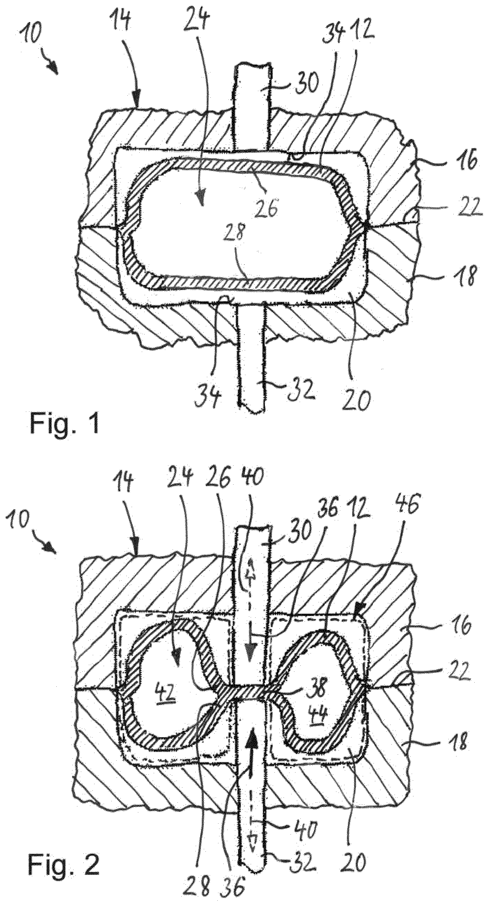

In den Fig. 1 bis 4 ist eine Vorrichtung 10 zum Blasformen eines Blasschlauchs 12 aus thermoplastischem Kunststoff dargestellt. Die Vorrichtung 10 umfasst eine Blasform 14, die aus einer ersten Blasformhälfte 16 und einer zweiten Blasformhälfte 18 gebildet ist. Die beiden Blasformhälften 16 und 18 umschließen zwischen sich einen Formhohlraum 20, wobei sie am Rand des Formhohlraums 20 an einer Formtrennfläche 22 aneinander anliegen.

In dem Formhohlraum 20 ist gemäß Fig. 1 in einem ersten Verfahrensschritt der Blasschlauch 12 als heißer und damit flexibler Vorformling eingebracht. Der Vorformling ist mit dem Schließen der beiden Blasformhälften 16 und 18 zu einer geschlossenen Blasform 12 an der Formtrennfläche 22 gegebenenfalls gequetscht und damit positioniert worden.

Der Blasschlauch 12 weist innerhalb der Blasform 14 einen ersten Wandbereich 26 und einen zweiten Wandbereich 28 auf, die einander an den beiden Blasformhälften 16 und 18 gegenüberliegen. Hinter diesen beiden Wandbereichen 26 bzw. 28 befindet sich außenseitig vom Formhohlraum 20 in der Blasform 14 jeweils ein erster Formschieber 30 bzw. ein zweiter Formschieber 32. Die Formschieber 30 bzw. 32 können in den Formhohlraum 20 hineinbewegt und herausbewegt werden.

Die Formschieber 30 und 32 befinden sich während des Einsetzens des Blasschlauchs 12 in den Formhohlraum 20, wie in Fig. 1 dargestellt, in der Blasform 14 und bilden dabei mit dieser Blasform 14 an der Grenze des Formhohlraums 20 jeweils eine glatte Oberfläche 34. Die Innengestalt des Formhohlraumes 20 entspricht mit ihren glatten Oberflächen 34 also bei diesem Verfahrensschritt der Innengestalt eines herkömmlichen bzw. gewöhnlichen Formhohlraums für das Einsetzen eines Blasschlauchs.

Erst nach einem Voraufblasen des Blasschlauchs 12 werden, wie in Fig. 2 dargestellt, die beiden Formschieber 30 und 32 gemäß einem Pfeil 36 einander gegenüberliegend in den Formhohlraum 20 hineinbewegt. Mit dem Hineinbewegen bzw. Hineinfahren der beiden Formschieber 30 und 32 werden die sich vor diesen Formschiebern 30 und 32 befindenden Wandbereiche 26 und 28 in den Formhohlraum 20 hinein verformt.

Der Verfahrweg der beiden Formschieber 30 und 32 ist derart weit bzw. lang gewählt, dass die beiden Wandbereiche 26 und 28 im Inneren des Formhohlraums in Kontakt miteinander gebracht werden und in diesem Kontaktbereich zu einer Verklebung 38 verkleben. Die Verklebung 38 der beiden Wandbereiche 26 und 28 ergibt sich insbesondere, weil in diesem Verfahrensstadium das Material des Blasschlauchs 12 noch heiß und damit thermoplastisch verformbar und verklebbar ist.

Nachdem die Verklebung 38 ausgebildet ist, werden nachfolgend die beiden Formschieber 30 und 32 wieder vollständig aus dem Formhohlraum 20 herausbewegt. Der Schlauchinnenraum 24 wird auf diese Weise in einen ersten 42 und einen zweiten Teil 44 unterteilt, wobei zugleich an der Grenze des Formhohlraums 20 sich wieder eine glatte Oberfläche 34 ergibt.

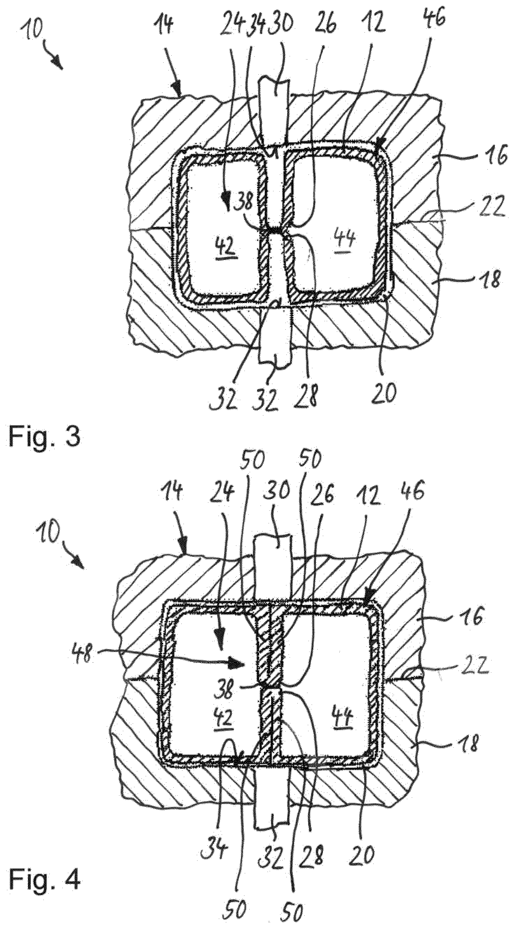

Nachfolgend werden, wie noch in Fig. 2 und dann in Fig. 3 dargestellt ist, diese beiden Teile 42 und 44 des Schlauchinnenraums 24 mittels einer nicht eigens dargestellten Blaseinrichtung zu einer Endform 46 des Blasschlauchs 12 aufgeblasen. Dabei wird das Material des Blasschlauchs 12 von innen nach außen gegen die Innenseite der beiden Blasformhälften 16 und 18 gedrängt. Bei dieser Endform 46 liegt also, wie dann in Fig. 4 dargestellt ist, das Material des Blasschlauchs 12 vollständig innenseitig an der glatten Oberfläche 34 auch vor den beiden zurückgefahrenen Formschiebern 30 und 32 an.

Zugleich bildet sich mit der Endform 46 im Inneren des Blasschlauchs 12 eine Verrippung 48 aus, deren Zentrum von der Verklebung 38 gebildet ist. Von der Verklebung 38 stehen dann nach außen hin insgesamt vier Rippenseitenwände 50 ab, von denen aufgrund des hohen Drucks beim vollständigen Aufblasen des Blasschlauchs 12 mittels der Blaseinrichtung jeweils zwei Rippenseitenwände 50 direkt aneinander gepresst werden. Diese beiden Rippenseitenwände 50 bilden als selbst eine Rippe, deren Material ebenfalls miteinander verklebt ist. Mit dem vollständigen Aufblasen und Anlegen des Materials des Blasschlauchs 12 gegen die Innenseite der Blasform 14 wird das Material abgekühlt. Das Material erhärtet damit und es bildet sich ein Fertigformling, der die innere Verrippung 48 aufweist, zugleich aber auch außenseitig, wie bei einer herkömmlichen Blasform vollständig glatt ist.

Abschließend sei angemerkt, dass sämtlichen Merkmalen, die in den Anmeldungsunterlagen und insbesondere in den abhängigen Ansprüchen genannt sind, trotz dem vorgenommenen formalen Rückbezug auf einen oder mehrere bestimmte Ansprüche, auch einzeln oder in beliebiger Kombination eigenständiger Schutz zukommen soll.

### Bezugszeichenliste

- 10: Vorrichtung zum Blasformen
- 12: Blasschlauch
- 14: Blasform
- 16: erste Blasformhälfte
- 18: zweite Blasformhälfte
- 20: Formhohlraum
- 22: Formtrennfläche
- 24: Schlauchinnenraum
- 26: erster Wandbereich
- 28: zweiter Wandbereich
- 30: erster Formschieber
- 32: zweiter Formschieber
- 34: glatte Oberfläche
- 36: Pfeil Hineinbewegen eines Formschiebers
- 38: Verklebung
- 40: Pfeil Herausbewegen eines Formschiebers
- 42: erster Teil des Schlauchinnenraums
- 44: zweiter Teil des Schlauchinnenraums
- 46: Endform des Blasschlauchs
- 48: Verrippung
- 50: Rippenseitenwand

## Patentansprüche

1. Verfahren zum Blasformen eines Blasschlauchs (12) mit den Schritten:
- Einführen eines Blasschlauchs (12) in einen Formhohlraum (20) einer Blasform (14),
- Einfahren eines Formschiebers (30, 32) in den Formhohlraum (20) und damit Hineinbewegen eines Wandbereichs (26, 28) des Blasschlauchs (12) in den Formhohlraum (20) bis es zu einer Verklebung (38) des Wandbereichs (26) mit einem gegenüberliegenden Wandbereich (28) des Blasschlauchs (12) kommt,
bei dem nach dem Einführen des Blasschlauchs (12) in den Formhohlraum (20) und vor der Verklebung (38) der beiden Wandbereiche (26, 28) der Blasschlauch (12) teilweise aufgeblasen wird,
und bei dem nach der Verklebung (38) der beiden Wandbereiche (26, 28) der Blasschlauch (12) vollständig aufgeblasen wird,
und das vollständige Aufblasen während oder nach einem Ausfahren des Formschiebers (30, 32) erfolgt.

2. Verfahren nach Anspruch 1,
bei dem der Formschieber (30, 32) nach der Verklebung (38) der beiden Wandbereiche (26, 28) wieder aus dem Formhohlraum (20) vollständig herausgefahren wird.

3. Verfahren nach Anspruch 1 oder 2,
bei dem ein zweiter Formschieber (32) in den Formhohlraum (20) eingefahren und damit der gegenüberliegende Wandbereich (28) des Blasschlauchs (12) in den Formhohlraum (20) bis zu der Verklebung (38) der beiden Wandbereiche (26, 28) hineinbewegt wird.

4. Vorrichtung (10) zum Blasformen eines Blasschlauchs (12), angepasst zum Durchführen eines Verfahrens gemäß einem der Ansprüche 1 bis 3, mit einer Blasform (14), in deren Formhohlraum (20) der Blasschlauch (12) zumindest teilweise aufzunehmen ist, und mit einem in den Formhohlraum (20) einfahrbaren Formschieber (30, 32),
bei der mit dem Formschieber (30, 32) ein Wandbereich (26) des Blasschlauchs (12) derart in den Formhohlraum (20) hinein bis zu einem gegenüberliegenden Wandbereich (28) des Blasschlauchs (12) zu bewegen ist, dass es zu einer Verklebung (38) der beiden Wandbereiche (26, 28) kommt,
bei der eine Blaseinrichtung vorgesehen ist, mittels der der Blasschlauch (12) nach einem Einführen des Blasschlauchs (12) in den Formhohlraum (20) und vor der Verklebung (38) der beiden Wandbereiche (26, 28) teilweise aufblasbar ist, und bei der eine Blaseinrichtung vorgesehen ist, mittels der der Blasschlauch (12) nach der Verklebung (38) der beiden Wandbereiche (26, 28) vollständig aufblasbar ist,
und das vollständige Aufblasen während oder nach einem Ausfahren des Formschiebers (30, 32) zu erfolgen ist.

5. Vorrichtung nach Anspruch 4,
bei der der Formschieber (30, 32) nach der Verklebung (38) der beiden Wandbereiche (26, 28) wieder aus dem Formhohlraum (20) vollständig herauszubewegen ist.

6. Vorrichtung nach Anspruch 4 oder 5,
bei der ein zweiter Formschieber (32) vorgesehen ist, mit dem der gegenüberliegende Wandbereich (28) des Blasschlauchs (12) in den Formhohlraum (20) hinein zu bewegen ist.

## Claims

1. Method for blow moulding a blow tube (12) comprising the following steps:
- inserting a blow tube (12) into a mould cavity (20) of a blow mould (14),
- injecting a mould slider (30, 32) into the mould cavity (20) and with that in-moving a wall area (26, 28) of the blow tube (12) into the mould cavity (20) until an adhesion (38) of the wall area (26) with an opposite wall area (28) of the blow tube (12) occurs,
in which after inserting the blow tube (12) into the mould cavity (20) and before the adhesion (38) of the two wall areas (26, 28) the blow tube (12) is at least partially inflated, and in which after the adhesion (38) of the two wall areas (26, 28) the blow tube (12) is fully inflated,
and the full inflation takes place during or after an ejection of the mould slider (30, 32).

2. Method according to claim 1,
in which the mould slider (30, 32) is fully ejected from the mould cavity (20) again after the adhesion (38) of the two wall areas (26, 28).

3. Method according to claim 1 or 2,
in which a second mould slider (32) is injected into the mould cavity (20) and with that the opposite wall area (28) of the blow tube (12) is moved into the mould cavity (20) up to the adhesion (38) of the two wall areas (26, 28).

4. Device (10) for blow-moulding a blow tube (12), adapted to carrying out a method according to one of claims 1 to 3, comprising a blow mould (14), into which mould cavity (20) the blow tube (12) has to be at least partially received, and comprising a mould slider (30, 32) injectable into the mould cavity (20),
in which the mould slider (30, 32) has to move a wall area (26) of the blow tube (12) into the mould cavity (20) up to a wall area (28) opposite of the blow tube (12) in such a manner that an adhesion (38) of both wall areas (26, 28) results,
in which a blowing device is provided, by which the blow tube (12) after inserting the blow tube (12) into the mould cavity (20) and before the adhesion (38) of the two wall areas (26, 28) the blow tube (12) is at least partially inflatable,
and in which a blowing device is provided, by which the blow tube (12) after the adhesion (38) of the two wall areas (26, 28) is fully inflatable,
and the full inflation takes place during or after an ejection of the mould slider (30, 32).

5. Device of according to claim 4,
in which the form slider (30, 32) after the adhesion (38) of the two wall areas (26, 28) has to again be fully moved out of the mould cavity (20).

6. Device according to claim 4 or 5,
in which a second mould slider (32) is provided, by which the opposite wall area (28) of the blow tube (12) is to be moved into the mould cavity (20).

## Revendications

1. Procédé de moulage par soufflage d'un flexible soufflé (12) avec les étapes suivantes :
- introduction d'un flexible soufflé (12) dans une chambre creuse de moulage (20) d'un moule par soufflage (14) ;
- introduction d'un coulisseau de moulage (30, 32) dans la chambre creuse de moulage (20) et ainsi déplacement vers l'intérieur d'une zone de paroi (26, 28) du flexible soufflé (12) dans la chambre creuse de moulage (20) jusqu'à obtention d'un collage (38) de la zone de paroi (26) avec une zone de paroi (28) opposée du flexible soufflé (12) ;
dans lequel le flexible soufflé (12) est en partie soufflé après l'introduction du flexible soufflé (12) dans la chambre creuse de moulage (20) et avant le collage (38) des deux zones de paroi (26, 28) ; et
dans lequel le flexible soufflé (12) est entièrement soufflé après le collage (38) des deux zones de paroi (26, 28) ;
et le soufflage entier se produit pendant ou après une sortie du coulisseau de moulage (30, 32).

2. Procédé selon la revendication 1, dans lequel le coulisseau de moulage (30, 32) est de nouveau entièrement sorti hors de la chambre creuse de moulage (20) après le collage (38) des deux zones de paroi (26, 28).

3. Procédé selon la revendication 1 ou 2, dans lequel un deuxième coulisseau de moulage (32) est rentré dans la chambre creuse de moulage (20) et ainsi la zone de paroi (28) opposée du flexible soufflé (12) est déplacée vers l'intérieur dans la chambre creuse de moulage (20) jusqu'au collage (38) des deux zones de paroi (26, 28).

4. Dispositif (10) de moulage par soufflage d'un flexible soufflé (12), adapté à la mise en oeuvre d'un procédé selon l'une quelconque des revendications 1 à 3, avec un moule par soufflage (14) dans la chambre creuse de moulage (20) duquel le flexible soufflé (12) est logé au moins en partie et avec un coulisseau de moulage (30, 32) pouvant être introduit dans la chambre creuse de moulage (20) ;
dans lequel une zone de paroi (26) du flexible soufflé (12) est déplacée vers l'intérieur dans la chambre creuse de moulage (20) avec le coulisseau de moulage (30, 32) jusqu'à une zone de paroi (28) opposée du flexible soufflé (12) de telle sorte que l'on parvient à un collage (38) des deux zones de paroi (26, 28) ;
dans lequel un dispositif de soufflage est prévu à l'aide duquel le flexible soufflé (12) peut en partie être soufflé après une introduction du flexible soufflé (12) dans la chambre creuse de moulage (20) et avant le collage (38) des deux zones de paroi (26, 28) ; et
dans lequel un dispositif de soufflage est prévu à l'aide duquel le flexible soufflé (12) peut être entièrement soufflé après le collage (38) des deux zones de paroi (26, 28) ; et le soufflage total est effectué pendant ou après une sortie du coulisseau de moulage (30, 32).

5. Dispositif selon la revendication 4, dans lequel le coulisseau de moulage (30, 32) est de nouveau entièrement déplacé vers l'extérieur hors de la chambre creuse de moulage (20) après le collage (38) des deux zones de paroi (26, 28).

6. Dispositif selon la revendication 4 ou 5, dans lequel un deuxième coulisseau de moulage (32) est prévu à l'aide duquel la zone de paroi (28) opposée du flexible soufflé (12) peut être déplacée vers l'intérieur dans la chambre creuse de moulage (20).
